# EUROPEAN PATENT SPECIFICATION

(11) **EP 3 848 332 B1**
(45) Date of publication and mention of the grant of the patent: **15.11.2023**
(21) Application number: 19856905.5
(22) Date of filing: 26.06.2019
(51) Int. Cl.: C02F 9/00, C02F 101/16, C02F 1/46, C02F 1/00, C02F 1/70

(54) **PLASMA DENITRIFICATION DEVICE AND OPERATING METHOD THEREOF**
PLASMA DENITRIFIKATIONSVORRICHTUNG UND BETRIEBSVERFAHREN DAFÜR
DISPOSITIF DE DÉNITRIFICATION PAR PLASMA ET SON PROCÉDÉ

(30) Priority: 03.09.2018 CN 201811020406
(43) Date of publication of application: 14.07.2021
(73) Proprietor: Dayuan Environmental Technology (Xiamen) Co., Ltd., Fujian 361000 (CN)
(72) Inventor: WU, Yibo, Xiamen, Fujian 361000 (CN); YAN, Chengkai, Xiamen, Fujian 361000 (CN)
(74) Representative: Meyer, Thorsten
(86) International application number: PCT/CN2019/092923
(87) International publication number: WO 2020/048191

(56) References cited:
- EP-A1- 1 057 785
- CN-A- 101 074 127
- CN-A- 102 583 656
- CN-A- 102 583 697
- CN-A- 107 324 561
- CN-A- 108 046 532
- CN-A- 108 911 316
- CN-U- 209 010 300
- JP-A- 2001 286 866
- KR-A- 20010 000 952
- KR-A- 20010 037 551
- KR-A- 20130 028 422
- US-A1- 2003 029 796
- US-A1- 2015 273 362

## Description

### FIELD OF THE INVENTION

This invention relates to the field of water purification, in particular a plasma denitrification device and operating method thereof.

### BACKGROUND OF THE INVENTION

Polluted water bodies (water sources) refer to water bodies that are polluted by organic matter, ammonia nitrogen, phosphorus, microorganisms, viruses, among others. According to some water quality indicators, such polluted water bodies do not meet the standards set forth in Chinese national standard GB3838-2002 ("Environmental Quality Standards for Surface Water"). Polluted water bodies can be purified mainly through physical, chemical and biological methods. However, it is difficult to completely remove various pollutants from the water body through any of the aforementioned methods. To increase the removal of water pollutants, two or more methods are often used in combination. Mainstream sewage treatment methods and devices include biochemical methods and biochemical treatment devices. However, these devices have a high investment cost and occupy a large area.

In the purification of various water pollutants, the treatment of total nitrogen and ammonia nitrogen is both the main focus and a difficult point. The devices for deep denitrification in the prior art include aerated biological filters and deep bed denitrification filters. These devices require additional carbon sources, as well as continuous aeration and backwashing during operation. They result in a high operating cost, a high construction cost, and occupy a large area. In addition, the aforementioned method removes nitrogen through microbial. Such a method places strict requirements on working conditions and water quality, and has complicated control parameters and processes.

Patent application KR20130028422A discloses a water treatment apparatus comprising a plasma underwater discharge to process organic matters which are not floated or precipitated, and to reduce water treatment time. Patent application EP1057785A1 discloses a method of treating liquid, a liquid treatment apparatus, and a liquid treatment system. Patent application CN 108046532 A discloses a processing method for removing nitrate nitrogen from industrial wastewater.

In summary, there is an urgent need for a denitrification device and a denitrification method that is economical, practical, safe, reliable, and simple.

### SUMMARY OF THE INVENTION

The objective of the present invention is to provide a plasma denitrification device and its operating method.

The technical solution of the present invention is described below.

One aspect of the present invention provides a plasma denitrification device, comprising:
a plasma generating device, which comprises a plasma generator and a pulsed power supply; the plasma generator comprises at least one set of an electrode to generate plasma; an inlet of the plasma generator is configured to allow sewage passage;
a denitrification reservoir, which comprises a shell and a denitrification zone, a water purification zone, and a sludge collecting zone provided in the shell; the denitrification zone and the water purification zone are adjacently arranged, the sludge collecting zone is arranged below the denitrification zone; a water inlet is provided at a side wall of the denitrification zone, a water outlet is provided at a side wall of the water purification zone;
a partition is provided between the denitrification zone and the water purification zone, and a water passage is provided at the partition; the denitrification zone and the water purification zone are connected through the water passage; a bottom of the denitrification zone is provided with a sludge collecting opening, the denitrification zone and the sludge collecting zone are connected through the sludge collecting opening; a sludge discharge opening is provided at a bottom of the sludge collecting zone;
the denitrification zone is provided with a water distributor, the water distributor evenly distributes sewage into the denitrification zone; an inlet of the water distributor connects an outlet of the plasma generator through the water inlet; an outlet of the water distributor is provided at the bottom of the denitrification zone;
the denitrification zone is provided with a catalyst layer, the catalyst layer comprises one or more selected from the group consisting of palladium, nickel, rhodium, copper, and iron; or comprises one or more selected from the group consisting of an oxide of palladium, an oxide of nickel, an oxide of rhodium, an oxide of copper, and an oxide of iron;
the plasma generator has a pulse voltage of 0.3 kV-30 kV, a current density of 1 - 10 mA/cm2, an operation frequency of 5-80 kHz;
the partition comprises an upper slotted partition and a lower slotted partition arranged adjacent to each other, the upper slotted partition borders the denitrification zone, the lower slotted partition borders the water purification zone; the water passage comprises an upper water passage and a lower water passage, the upper water passage is provided at the top of the upper slotted partition, the lower water passage is provided at the bottom of the lower slotted partition; a space between the upper slotted partition and the lower slotted partition constitutes a water passage route;
an upper surface of the catalyst layer is lower than a bottom of the upper water passage, a lower surface of the catalyst layer is higher than an outlet of the water distributor.

Preferably, a weir plate is provided at the water outlet, the weir plate and a side wall of the water purification zone constitute a water outlet channel.

Preferably, the electrode is any one of a graphite electrode, an iron electrode, an aluminum electrode, a zinc electrode, a copper electrode, a lead electrode, a nickel electrode, an alloy electrode, or an inert electrode coated with a noble metal oxide.

In a particular embodiment, a filter material layer is provided in the denitrification zone, an upper surface of the filter material layer is below the upper water passage, a lower surface of the filter material layer is above the catalyst layer.

Preferably, the filter material layer comprises granular quartz sand.

In another aspect of the present invention, the present invention provides a method for operating the plasma denitrification device according to claim 1, comprising the following steps:
S1: performing plasma treatment on water introduced from an inlet of a plasma generator under electrified conditions; the water stays in the plasma generator for 1-10 s; the plasma generator has a pulse voltage of 0.3 kV-30 kV, a current density of 1 - 10 mA/cm², an operation frequency of 5-80 kHz; wherein the catalyst comprises one or more selected from the group consisting of palladium, nickel, rhodium, copper, and iron; or comprises one or more selected from the group consisting of an oxide of palladium, an oxide of nickel, an oxide of rhodium, an oxide of copper, and an oxide of iron;
S2: directing the water treated in S1 through an outlet of the plasma generator and a water distributor to a denitrification reservoir to undergo a denitrification reaction for 10-30 minutes; sludge in the water deposits to the bottom of the denitrification reservoir and is discharged; the water in an upper part of the denitrification reservoir is discharged through a water outlet;
S3: examining water quality of effluent from S2, the effluent is either directly discharged or enters a circulating waterway and is subjected to steps S1-S3 again.

Compared with the prior art, the beneficial effects of the plasma denitrification device and its operating method of the present invention are:
1. The plasma denitrification device of the present invention comprises two components, a plasma generating device and a denitrification reservoir. It has a simple structure and allows a simple purification process.
2. The plasma denitrification device of the present invention occupies a small area of only 30-50 square meters per 10,000 tons of water, which is about one-tenth of that of an aerated biological tank or a deep bed denitrification filter. The investment cost for the plasma generating device of the present invention is low, and the device can operate in a range of environments.
3. The plasma denitrification device of the present invention has only a few control parameters. Polluted water bodies can be purified by simply changing the voltage, current density, frequency of the plasma machine and water residence time. Less energy is consumed, and the device has a low operating cost.
4. The plasma denitrification device of the present invention can generate oxygen during its operation, which results in an increased level of dissolved oxygen in the water body: the dissolved oxygen content of the effluent can reach more than 7 mg/L. The increased dissolved oxygen level promotes self-purification of the water body and effectively inhibits algae growth.
5. The plasma denitrification device of the present invention can also reduce total phosphorus and organic matter in the water body and reduce chroma, COD and BOD of the water body. 70-95% of the total phosphorus in the water body can be removed; the total phosphorus in the effluent is less than 0.2 mg/L. 20-60% of COD is removed. Water quality of the polluted water body is increased.

### BRIEF DESCRIPTION OF DRAWINGS

To better illustrate the technical solutions of the present invention, the embodiments or the prior art will be described with reference to the accompanying drawings. Obviously, the accompanying drawings only illustrate some embodiments of the present invention. Those skilled in the art can produce other drawings from these accompanying drawings without creative effort.
Fig. 1 is a structural diagram of one embodiment of the present invention.
Fig. 2 is a structural diagram of another embodiment of the present invention.

Reference numerals: 100-plasma generating device; 200-denitrification reservoir; 110-plasma generator; 120-pulsed power supply; 210-denitrification zone; 220-water purification zone; 230-sludge collecting zone; 240-water distributor; 250-catalyst layer; 270-filter material layer; 211-water inlet; 221-water outlet; 222-weir plate; 223-water outlet channel; 231-sludge discharge opening; 261-upper slotted partition; 262-lower slotted partition; 263-upper water passage; 264-lower water passage; 265-water passage route.

### DETAILED DESCRIPTION OF EMBODIMENTS

The technical solutions and embodiments of the present invention will be clearly and fully described below with reference to the accompanying drawings. Obviously, the embodiments described are only some of the embodiments of the present invention. Based on the embodiments of the present invention, all other embodiments obtainable by those of ordinary skill in the art without creative effort are within the protection scope of the present invention as defined by the appended claims.

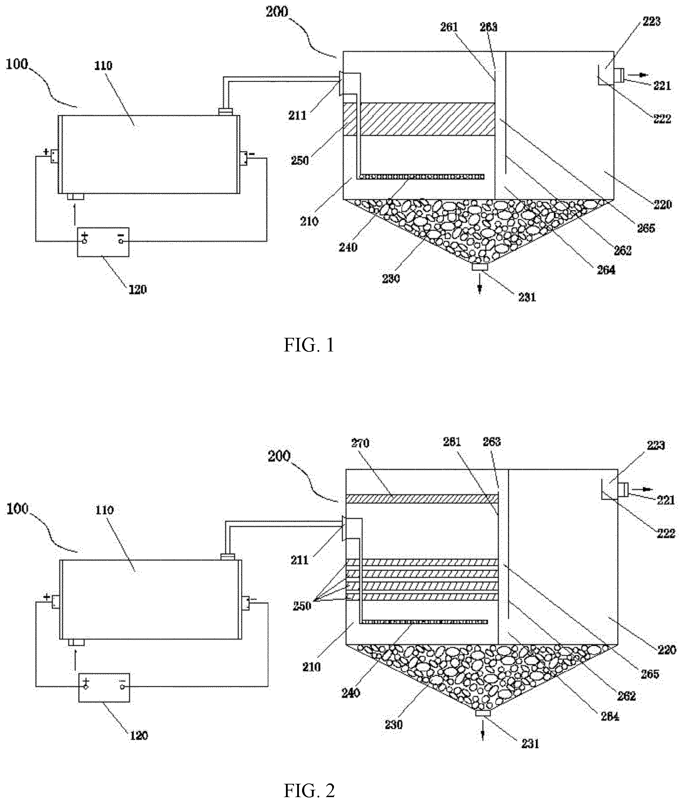

Please refer to Figs. 1 and 2. The present invention provides a plasma denitrification device, comprising:
a plasma generating device 100, which comprises a plasma generator 110 and a pulsed power supply 120; the plasma generator comprises at least one set of electrodes to generate plasma; an inlet of the plasma generator is configured to allow sewage passage;
a denitrification reservoir 200, which comprises a shell and a denitrification zone 210, a water purification zone 220, and a sludge collecting zone 230 provided inside the shell; the denitrification zone 210 and the water purification zone 220 are adjacently arranged, the sludge collecting zone 230 is arranged below the denitrification zone 210; a water inlet 211 is provided at a side wall of the denitrification zone 210, a water outlet 221 is provided at a side wall of the water purification zone 220;
a partition is provided between the denitrification zone 210 and the water purification zone 220, and a water passage is provided at the partition; the denitrification zone 210 and the water purification zone 220 are connected through the water passage; the bottom of the denitrification zone 210 is provided with a sludge collecting opening, the denitrification zone 210 and the sludge collecting zone 230 are connected through the sludge collecting opening; a sludge discharge opening 231 is provided at the bottom of the sludge collecting zone 230;
the denitrification zone 210 is provided with a water distributor 240, the water distributor evenly distributes sewage in the denitrification zone 210; an inlet of the water distributor 240 connects an outlet of the plasma generator 110 through the water inlet 211; an outlet of the water distributor 240 is provided at the bottom of the denitrification zone 210.

The plasma generated by plasma generator 110 reacts with various substances in the water to generate free radicals. The positive electrode of pulsed power supply 120 is connected to an anode plate of plasma generator 110, and the negative electrode is connected to a cathode plate of plasma generator 110.

In an embodiment of the present invention, the inlet of plasma generator 110 connects an inlet pipe. The inlet pipe is provided with a lift pump to pump the sewage in. The inlet pipe or the water inlet 211 of the plasma generating device 100 is provided with a flow sensor.

The aforementioned shell should be able to withstand a pressure of at least 0.5 MPa. Preferably, the top of the shell is sealed by a sealing ring and a valve. Optionally, the upper part of denitrification reservoir 200 is cube-shaped, cuboid-shaped or cylinder-shaped.

The aforementioned shell includes an outer layer and an inner protective layer. In a specific embodiment of the present invention, the outer layer comprises a steel plate layer and/or a concrete layer, the inner protective layer is an epoxy asphalt paint layer. Preferably, the height measured from the bottom to the top of denitrification reservoir 200 is 5000-10,000 mm. The outlet of the water distributor 240 is arranged at a height of 800-2,000 mm, measured from the bottom surface of denitrification zone 210.

Preferably, a pressure sensor and a safety valve are installed on the top of denitrification reservoir 200.

Preferably, sludge discharge opening 231 is connected with a T-piece and a sludge pump. The width of sludge collecting zone 230 gradually decreases from top to bottom. A partition is provided between sludge collecting zone 230 and the water purification zone.

The partition comprises an upper slotted partition 261 and a lower slotted partition 262 arranged next to each other, upper slotted partition 261 borders denitrification zone 210, lower slotted partition 262 borders water purification zone 220; the water passage comprises an upper water passage 263 and a lower water passage 264, upper water passage 263 is provided at the top of upper slotted partition 261, lower water passage 264 is provided at the bottom of lower slotted partition 262; the space between upper slotted partition 261 and lower slotted partition 262 constitutes a water passage route 265.

Preferably, the gap between upper slotted partition 261 and lower slotted partition 262 is 50-300 mm; that is, the width of water passage route 265 is 50-300 mm.

Denitrification zone 210 is provided with a catalyst layer 250, an upper surface of catalyst layer 250 is lower than the bottom of upper water passage 263, a lower surface of catalyst layer 250 is higher than an outlet of water distributor 240.

The catalyst layer comprises one or more selected from the group consisting of palladium, nickel, rhodium, copper, and iron; or comprises one or more selected from the group consisting of an oxide of palladium, an oxide of nickel, an oxide of rhodium, an oxide of copper, and an oxide of iron. Preferably, the metal or metal oxide in catalyst layer 250 is in the form of nanoparticles.

In an embodiment of the present invention, catalyst layer 250 is integrally packed into one layer; in another embodiment, catalyst layer 250 comprises a plurality of layers, with gaps between adjacent layers.

Preferably, catalyst layer 250 is at a height of 1,500-5,000 mm from the bottom surface of denitrification zone 210. The total thickness of the catalyst is 500-3,000 mm.

Preferably, a filter material layer 270 is provided in denitrification zone 210, an upper surface of filter material layer 270 is below upper water passage 263, a lower surface of filter material layer 270 is above catalyst layer 250.

Filter material layer 270 comprises granular quartz sand.

Preferably, a weir plate 222 is provided at water outlet 221, weir plate 222 and a side wall of water purification zone 220 constitute a water outlet channel 223. This arrangement allows a uniform water flow. Preferably, water outlet 221 is arranged at the side wall of water purification zone 220 and is 300-600 mm from the upper wall of the water purification zone 220. At least one water outlet 221 is provided at the side wall of water purification zone 220.

Preferably, water outlet 221 is connected to a circulating water pipe. The circulating water pipe recycles the effluent of denitrification reservoir 200 to a collection tank; the effluent then reenters plasma generating device 100 and denitrification reservoir 200 for re-purification. A circulating water pump and a three-way valve are provided in the circulating water pipe.

Preferably, a stirring device is provided in denitrification zone 210.

The electrode is any one of a graphite electrode, an iron electrode, an aluminum electrode, a zinc electrode, a copper electrode, a lead electrode, a nickel electrode, an alloy electrode, or an inert electrode coated with a noble metal oxide.

The plasma denitrification device also can comprise a control device for acquiring and controlling an operating state of the plasma denitrification device; the control device comprises a controller, a PLC, a sensor, and a valve manifold.

The aforementioned sensor comprises a conductivity sensor, a pressure sensor, a flow sensor, an electric potential sensor, a sensor to monitor stirring speed, a temperature sensor, a chlorine sensor, a hydrogen sensor, and a pH sensor.

Preferably, the working water pressure in denitrification reservoir 200 is 0.05-0.4 MPa.

More preferably, the working water pressure in denitrification reservoir 200 is 0.1-0.3 MPa.

Plasma generating device 100 generates a large amount of plasma during operation. The plasma reacts with water to generate a large number of highly reactive free radicals. O˙ and OH can react with organic molecules to produce water and carbon dioxide. O˙ radicals react with NH₃ to form water and NO₃ ⁻. Cl˙ and H˙ react with NO3 ⁻ and ammonia nitrogen to form N₂ and H₂O.

The H˙ radicals produced may react with each other to form hydrogen gas, generating a large number of microbubbles in this process. The H˙ radicals produced may react with NO₃ ⁻ and NO₂⁻, also generating a large number of microbubbles in this process. These hydrogen and nitrogen microbubbles float to the surface, bringing a large number of suspended solids with them, resulting in solid-liquid separation. Such a dissolved air flotation process helps to reduce the values of various pollution indicators, including the COD, chroma, and turbidity of wastewater. Through the dissolved air flotation process, part of the solid matter floats towards the water surface of denitrification zone 210 and is blocked by filter material layer 270.

A method for operating a plasma denitrification device according to claim 1 comprises the following steps:
S1: performing plasma treatment on water entered from an inlet of plasma generator 110 under electrified conditions; the water stays in plasma generator 110 for 1-10s; the plasma generator has a pulse voltage of 0.3 kV-30 kV, a current density of 1 - 10 mA/cm², an operation frequency of 5-80 kHz.
S2: directing the water of S1 through an outlet of plasma generator 110 and water distributor 240 to denitrification reservoir 200 to undergo a denitrification reaction for 10-30 minutes; sludge in the water deposits to the bottom of denitrification reservoir 200 and is discharged; the water in an upper part of denitrification reservoir 200 is discharged through water outlet 221.
S3: examining the water quality of effluent from S2, the effluent is either directly discharged or enters a circulating waterway and is subjected to steps S1-S3 again.

The water purification mechanism of the plasma denitrification device of the present invention is as follows:

During the operation of plasma generating device 100, a large amount of plasma is generated. The plasma reacts with water to generate a large number of active free radicals, including O˙, OH, O , Cl˙, and H˙.

### 1. The removal of ammonia nitrogen

O generated in the plasma process reacts with ammonia to generate nitrate.

NH₃ + O˙ -→ NO₃⁻ +H₂O

NH₄⁺ + O˙ -→ N₂ ↑ + H₂O

### 2. Removing total nitrogen

The mechanism for the removal of nitrate nitrogen is that the H' produced during the plasma process reacts with nitrate in the presence of a catalyst to generate water and nitrogen.

NO₂⁻ + O˙ -→ NO₃⁻

NO₃⁻ + H˙ -→ NO₂⁻ + H₂O

NO₂⁻ + H˙ -→ N₂ ↑ + H₂O

(main reaction for total nitrogen removal)

Organic nitrogen is a general term to describe carbon-containing nitrogenous substances. They are present in plants, soil and fertilizers. Examples include proteins, amino acids, amides, urea, heterocyclic compounds, among others. Under the action of the plasma, ring-opening and chain breakage reactions take place, and the organic nitrogen decomposes into ammonia nitrogen or nitrate nitrogen. Ammonia nitrogen or nitrate nitrogen respectively reacts with Cl, O, OH, H, and other free radicals to form nitrogen and water.

### 3. Aiding the removal of total phosphorus, the lowering of COD, BOD and the increase in dissolved oxygen.

The plasma breaks down a large number of microbial cell walls in the water, the cell sap flows into water, and phosphoric acid in the organism is oxidized to inorganic phosphorus by free radicals. Fe³⁺ in the water reacts with PO₄³⁻ to form iron phosphate precipitation, thereby removing phosphorus from the water. Organic matter including petroleum, animal and vegetable oils are removed through adsorption.

Fe³⁺ + PO₄³ -→ FePO₄ ↓

(main reaction for phosphorus removal)

Free radicals such as O and HO can quickly oxidize and decompose reducing substances in the water (including organic matter, such as dyes) and reducing the COD of the wastewater (sewage) by 20-60%.

RH (organic matter) + O˙ -→ CO₂ ↑ + H₂O

RH (organic matter) + HO˙ -→ CO₂ ↑ + H₂O

Cl˙ + H₂O -→ HClO -→ O˙ + HCl

The plasma collides with water molecules, breaking the chemical bonds of the water molecules and generating oxygen. This process greatly increases the level of dissolved oxygen in the treated water.

O˙ + O˙ -→ O₂ ↑

### EMBODIMENT 1

An embodiment illustrating the denitrification of a polluted water body. The water body is treated in sections, the volume of each section is 10,000 m³, and the length of the water body is 2,000 m. The main pollution source for a water section or zone is identified and diverted to a reservoir; water from downstream of the water body is directed to the reservoir at the same time. Water is pumped from the reservoir to plasma generator 110 by a lift pump. The operating parameters for plasma generator 110 are pulse voltage: 20 kV, current density: 8 mA/cm², frequency: 40 kHz, and the water stays in plasma generator 110 for 8s. The water after plasma treatment flows into denitrification reservoir 200 for denitrification treatment to remove ammonia nitrogen and total nitrogen. The water stays in denitrification reservoir 200 for 25 minutes. The denitrified water is introduced upstream of the water body and re-enters plasma generator 110. After three cycles of treatment, the treated water body meets the standards set forth in Chinese national standard GB3838-2002 ("Environmental Quality Standards for Surface Water"). Various water quality indicators of the water body before and after denitrification are shown in Table 1.

**Table 1 - Water Quality Indicators Before and After Denitrification of Polluted Water Body**

| Indicators | Polluted water body | 1^{st} cycle | 2^{nd} cycle | 3^{rd} cycle |
|---|---|---|---|---|
| Observation | Black liquid; strong foul odor | Weak foul odor | No odor | Clear, odorless liquid |
| pH | 5.0 | 6.6 | 6.8 | 7.1 |
| Dissolved oxygen (mg/L) | 1.7 | 4.5 | 6.5 | 8.3 |
| Ammonia nitrogen (mg/L) | 5.5 | 2.0 | 0.7 | 0.1 |
| Total phosphorus (mg/L) | 4.3 | 0.4 | 0.2 | 0.1 |
| Total nitrogen | 20 | 10 | 5 | 1 |
| (mg/L) | | | | |
| Chroma (times) | 400 | 80 | 35 | 2 |

### EMBODIMENT 2

An embodiment illustrating the denitrification of a polluted water body. The water body is treated in sections, the volume of each section is 20,000 m³, and the area of the water body is 100,000 m². The main pollution source for a water section or zone is identified and diverted to a reservoir; water from downstream of the water body is directed to the reservoir at the same time. Water is pumped from the reservoir to plasma generator 110 by a lift pump. The operating parameters for plasma generator 110 are pulse voltage: 0.3 kV, current density: 10 mA/cm², frequency: 80 kHz, and the water stays in plasma generator 110 for 10s. The water after plasma treatment flows into denitrification reservoir 200 for denitrification treatment to remove ammonia nitrogen and total nitrogen. The water stays in denitrification reservoir 200 for 20 minutes. The denitrified water is introduced upstream of the water body and re-enters plasma generator 110. After two cycles of treatment, the treated water body meets the standards set forth in Chinese national standard GB3838-2002 ("Environmental Quality Standards for Surface Water"). Various water quality indicators of the water body before and after denitrification are shown in Table 2.

**Table 2 - Water Quality Indicators Before and After Denitrification of Polluted Water Body**

| Indicators | Polluted water body | 1^{st} cycle | 2^{nd} cycle |
|---|---|---|---|
| Observation | Black liquid; strong foul odor | Weak foul odor | Colorless, odorless, liquid |
| pH | 8.7 | 8.1 | 7.2 |
| Dissolved oxygen (mg/L) | 1.2 | 4.3 | 7.6 |
| COD (mg/L) | 45 | 27 | 15 |
| BOD (mg/L) | 12 | 7 | 3 |
| Ammonia nitrogen (mg/L) | 12.1 | 2.3 | 0.5 |
| Total phosphorus (mg/L) | 3.3 | 0.4 | 0.1 |
| Total nitrogen (mg/L) | 8 | 3 | 1 |
| Chroma (times) | 200 | 40 | 1 |

### EMBODIMENT 3

An embodiment illustrating the denitrification of a polluted water body. Wastewater is introduced into plasma generator 110. The operating parameters for plasma generator 110 are pulse voltage: 50 kV, current density: 1 mA/cm², frequency: 80 kHz, and the water stays in plasma generator 110 for 10s. The water after plasma treatment flows into denitrification reservoir 200 for denitrification treatment to remove ammonia nitrogen and total nitrogen. The water stays in denitrification reservoir 200 for 30 minutes. The denitrified water is introduced upstream of the wastewater body and re-enters plasma generator 110. After two cycles of treatment, the treated water body meets the standards set forth in Chinese national standard GB3838-2002 ("Environmental Quality Standards for Surface Water"). Various water quality indicators of the water body before and after denitrification are shown in Table 3.

**Table 3 - Water Quality Indicators Before and After Denitrification of Polluted Water Body**

| Indicators | Polluted water body | 1^{st} cycle | 2^{nd} cycle | 3^{rd} cycle |
|---|---|---|---|---|
| Observation | Black liquid; strong foul odor | Weak foul odor | No odor | Clear, odorless liquid |
| pH | 8.0 | 7.6 | 7.2 | 7.1 |
| Dissolved oxygen (mg/L) | 1.1 | 3.9 | 6.7 | 8.1 |
| COD (mg/L) | 42 | 30 | 22 | 15 |
| BOD (mg/L) | 17 | 8 | 3 | Undetectable |
| Ammonia nitrogen (mg/L) | 6.2 | 1.7 | 0.6 | 0.1 |
| Total phosphorus (mg/L) | 2.3 | 0.4 | 0.2 | 0.1 |
| Total nitrogen (mg/L) | 11 | 7 | 4 | 1 |
| Chroma (times) | 180 | 60 | 10 | 1 |

### EMBODIMENT 4

An embodiment illustrating the denitrification of a polluted water body. The water body is treated in sections, the volume of each section is 15,000 m³, and the area of the water body is 100,000 m². The main pollution source for a water section or zone is identified and diverted to a reservoir; water from downstream of the water body is directed to the reservoir at the same time. Water is pumped from the reservoir to plasma generator 110 by a lift pump. The operating parameters for plasma generator 110 are pulse voltage: 50 kV, current density: 5 mA/cm², frequency: 5 kHz, and the water stays in plasma generator 110 for 5s. The water after plasma treatment flows into denitrification reservoir 200 for denitrification treatment to remove ammonia nitrogen and total nitrogen. The water stays in denitrification reservoir 200 for 10 minutes. The denitrified water is introduced upstream of the water body and re-enters plasma generator 110. After three cycles of treatment, the treated water body meets the standards set forth in Chinese national standard GB3838-2002 ("Environmental Quality Standards for Surface Water"). Various water quality indicators of the water body before and after denitrification are shown in Table 4.

**Table 4 - Water Quality Indicators Before and After Denitrification of Polluted Water Body**

| Indicators | Polluted water body | 1st cycle | 2nd cycle | 3rd cycle |
|---|---|---|---|---|
| Observation | Black liquid; strong foul odor | Weak foul odor | No odor | Clear, odorless liquid |
| Dissolved oxygen (mg/L) | 1.1 | 3.5 | 6.3 | 8.1 |
| COD (mg/L) | 35 | 23 | 19 | 15 |
| BOD (mg/L) | 12 | 9 | 5 | Undetectable |
| Ammonia nitrogen (mg/L) | 2.3 | 0.9 | 0.3 | 0.1 |
| Total phosphorus (mg/L) | 9.5 | 0.7 | 0.2 | 0.1 |
| Total nitrogen (mg/L) | 13 | 8 | 3 | 1.0 |

### EMBODIMENT 5

Wastewater is introduced into plasma generator 110. The operating parameters for plasma generator 110 are pulse voltage: 50 kV, current density: 1 mA/cm², frequency: 80 kHz, and the water stays in plasma generator 110 for 1s. The water after plasma treatment flows into denitrification reservoir 200 for denitrification treatment to remove ammonia nitrogen and total nitrogen. The water stays in denitrification reservoir 200 for 10 minutes. The denitrified water is introduced upstream of the wastewater body and re-enters plasma generator 110. After three cycles of treatment, the treated water body meets the standards set forth in Chinese national standard GB3838-2002 ("Environmental Quality Standards for Surface Water"). Various water quality indicators of the water body before and after denitrification are shown in Table 5.

**Table 5 - Water Quality Indicators Before and After Denitrification of Polluted Water Body**

| Indicators | Lightly polluted water body | 1^{st} cycle | 2^{nd} cycle | 3^{rd} cycle |
|---|---|---|---|---|
| Observation | Black liquid; strong foul odor | Weak foul odor | No odor | Clear, odorless liquid |
| pH | 6.5 | 6.8 | 6.9 | 7.2 |
| Dissolved oxygen (mg/L) | 1.3 | 3.6 | 6.5 | 7.9 |
| COD (mg/L) | 32 | 21 | 15 | 11 |
| BOD (mg/L) | 13 | 7 | 4 | Undetectable |
| Ammonia nitrogen (mg/L) | 2.6 | 1.1 | 0.4 | 0.1 |
| Total phosphorus (mg/L) | 8.3 | 0.7 | 0.2 | 0.1 |
| Total nitrogen (mg/L) | 7.5 | 4 | 1.5 | 0.8 |
| Chroma (times) | 60 | 10 | 2 | 1 |

The embodiments described above are the preferred embodiments of the present invention. As mentioned above, the present invention is not limited to the disclosure of the present invention, as the scope of protection is defined in the appended claims, and the description above does not lead to the exclusion of other possible embodiments. Other combinations and moderations that are within the scope of the invention are possible. Those skilled in the art understand that various alterations and modifications can be carried out without departing from the scope of the present invention.

## Claims

1. A plasma denitrification device, **characterized in that** it comprises:
a plasma generating device (100), which comprises a plasma generator (110) and a pulsed power supply (120); the plasma generator comprises at least one set of an electrode configured to generate plasma; an inlet of the plasma generator is configured to allow sewage passage;
a denitrification reservoir (200), which comprises a shell and a denitrification zone (210), a water purification zone (220), and a sludge collecting zone (230) provided inside the shell; the denitrification zone (210) and the water purification zone (220) are adjacently arranged, the sludge collecting zone (230) is arranged below the denitrification zone (210); a water inlet (211) is provided at a side wall of the denitrification zone (210), a water outlet (221) is provided at a side wall of the water purification zone (220);
a partition is provided between the denitrification zone (210) and the water purification zone (220), and a water passage is provided at the partition; the denitrification zone (210) and the water purification zone (220) are connected through the water passage; a bottom of the denitrification zone (210) is provided with a sludge collecting opening, the denitrification zone (210) and the sludge collecting zone (230) are connected through the sludge collecting opening; a sludge discharge opening (231) is provided at a bottom of the sludge collecting zone (230);
the denitrification zone (210) is provided with a water distributor (240), the water distributor (240) evenly distributes sewage into the denitrification zone (210); an inlet of the water distributor (240) connects an outlet of the plasma generator (110) through the water inlet (211); an outlet of the water distributor (240) is provided at the bottom of the denitrification zone (210);
the denitrification zone (210) is provided with a catalyst layer (250), the catalyst layer comprises one or more selected from the group consisting of palladium, nickel, rhodium, copper, and iron; or comprises one or more selected from the group consisting of an oxide of palladium, an oxide of nickel, an oxide of rhodium, an oxide of copper, and an oxide of iron;
the plasma generator has a pulse voltage of 0.3 kV-30 kV, a current density of 1 - 10 mA/cm², an operation frequency of 5-80 kHz;
the partition comprises an upper slotted partition (261) and a lower slotted partition (262) arranged adjacent to each other, the upper slotted partition (261) borders the denitrification zone (210), the lower slotted partition (262) borders the water purification zone (220); the water passage comprises an upper water passage (263) and a lower water passage (264), the upper water passage (263) is provided at a top of the upper slotted partition (261), the lower water passage (264) is provided at a bottom of the lower slotted partition (262); a space between the upper slotted partition (261) and the lower slotted partition (262) constitutes a water passage route (265).
an upper surface of the catalyst layer (250) is lower than a bottom of the upper water passage (263), a lower surface of the catalyst layer (250) is higher than an outlet of the water distributor (240).

2. The plasma denitrification device according to claim 1, **characterized in that** a weir plate (222) is provided at the water outlet (221), the weir plate (222) and a side wall of the water purification zone (220) constitute a water outlet channel (223).

3. The plasma denitrification device according to claim 1, **characterized in that** the electrode is any one of a graphite electrode, an iron electrode, an aluminum electrode, a zinc electrode, a copper electrode, a lead electrode, a nickel electrode, an alloy electrode, or an inert electrode coated with a noble metal oxide.

4. The plasma denitrification device according to any one of claims 1-3, **characterized in that** a filter material layer (270) is provided in the denitrification zone (210), an upper surface of the filter material layer (270) is below the upper water passage (263), a lower surface of the filter material layer (270) is above the catalyst layer (250).

5. The plasma denitrification device according to claim 4, **characterized in that** the filter material layer (270) comprises granular quartz sand.

6. A method for operating the plasma denitrification device according to claim 1, comprising the following steps:
S1: performing plasma treatment on raw water introduced from an inlet of a plasma generator (110) under electrified condition and a catalysts; the water stays in the plasma generator (110) for 1-10 s; the plasma generator has a pulse voltage of 0.3 kV-30 kV, a current density of 1 - 10 mA/cm², an operation frequency of 5-80 kHz;
S2: directing the water treated in S1 through an outlet of the plasma generator (110) and a water distributor (240) to a denitrification reservoir (200) to undergo a denitrification reaction for 10-30 minutes; sludge in the water deposits to a bottom of the denitrification reservoir (200) and is discharged; the water in an upper part of the denitrification reservoir (200) is discharged through a water outlet (221);
S3: examining water quality of effluent from S2, the effluent is either directly discharged or enters a circulating waterway and is subjected to steps S1-S3 again.

## Patentansprüche

1. Plasmadenitrifikationsvorrichtung, **dadurch gekennzeichnet, dass** sie umfasst:
eine Plasmaerzeugungsvorrichtung (100), die einen Plasmagenerator (110) und eine gepulste Energieversorgung (120) umfasst; wobei der Plasmagenerator mindestens einen Elektrodensatz umfasst, der ausgelegt ist, ein Plasma zu erzeugen; wobei ein Einlass des Plasmagenerators ausgelegt ist, Abwasser hindurch zu lassen;
einen Denitrifikationsbehälter (200), der einen Mantel und eine Denitrifikationszone (210), eine Wasseraufbereitungszone (220) und eine im Inneren des Mantels vorgesehene Schlammsammelzone (230) umfasst; wobei die Denitrifikationszone (210) und die Wasseraufbereitungszone (220) nebeneinander angeordnet sind, die Schlammsammelzone (230) unterhalb der Denitrifikationszone (210) angeordnet ist; ein Wassereinlass (211) an einer Seitenwand der Denitrifikationszone (210) vorgesehen ist, ein Wasserauslass (221) an einer Seitenwand der Wasseraufbereitungszone (220) vorgesehen ist;
eine Trennwand zwischen der Denitrifikationszone (210) und der Wasseraufbereitungszone (220) vorgesehen ist und ein Wasserdurchlass an der Trennwand vorgesehen ist; die Denitrifikationszone (210) und die Wasseraufbereitungszone (220) durch den Wasserdurchlass verbunden sind; ein Boden der Denitrifikationszone (210) mit einer Schlammsammelöffnung versehen ist, die Denitrifikationszone (210) und die Schlammsammelzone (230) über die Schlammsammelöffnung verbunden sind; eine Schlammauslassöffnung (231) an einem Boden der Schlammsammelzone (230) vorgesehen ist;
die Denitrifikationszone (210) mit einem Wasserverteiler (240) versehen ist, der Wasserverteiler (240) Abwasser gleichmäßig in die Denitrifikationszone (210) verteilt; ein Einlass des Wasserverteilers (240) einen Auslass des Plasmagenerators (110) über den Wassereinlass (211) anbindet; ein Auslass des Wasserverteilers (240) am Boden der Denitrifikationszone (210) vorgesehen ist;
die Denitrifikationszone (210) mit einer Katalysatorschicht (250) versehen ist, die Katalysatorschicht Palladium und/oder Nickel und/oder Rhodium und/oder Kupfer und/oder Eisen umfasst; oder ein Palladiumoxid und/oder ein Nickeloxid und/oder ein Rhodiumoxid und/oder ein Kupferoxid und/oder ein Eisenoxid umfasst;
der Plasmagenerator eine Impulsspannung von 0,3 kV-30 kV, eine Stromdichte von 1-10 mA/cm², eine Betriebsfrequenz von 5-80 kHz aufweist;
die Trennwand eine obere geschlitzte Trennwand (261) und eine untere geschlitzte Trennwand (262) umfasst, die nebeneinander angeordnet sind, wobei die obere geschlitzte Trennwand (261) an die Denitrifikationszone (210) angrenzt, die untere geschlitzte Trennwand (262) an die Wasseraufbereitungszone (220) angrenzt; der Wasserdurchlass einen oberen Wasserdurchlass (263) und einen unteren Wasserdurchlass (264) umfasst, der obere Wasserdurchlass (263) an einer Oberseite der oberen geschlitzten Trennwand (261) vorgesehen ist, der untere Wasserdurchlass (264) an einem Boden der unteren geschlitzten Trennwand (262) vorgesehen ist; ein Raum zwischen der oberen geschlitzten Trennwand (261) und der unteren geschlitzten Trennwand (262) einen Wasserdurchlassweg (265) bildet;
eine obere Oberfläche der Katalysatorschicht (250) unter einem Boden des oberen Wasserdurchlasses (263) liegt, eine untere Oberfläche der Katalysatorschicht (250) über einem Auslass des Wasserverteilers (240) liegt.

2. Plasmadenitrifikationsvorrichtung nach Anspruch 1, **dadurch gekennzeichnet, dass** eine Wehrplatte (222) am Wasserauslass (221) vorgesehen ist, die Wehrplatte (222) und eine Seitenwand der Wasseraufbereitungszone (220) einen Wasserauslasskanal (223) bilden.

3. Plasmadenitrifikationsvorrichtung nach Anspruch 1, **dadurch gekennzeichnet, dass** die Elektrode entweder eine Graphitelektrode oder eine Eisenelektrode oder eine Aluminiumelektrode oder eine Zinkelektrode oder eine Kupferelektrode oder eine Bleielektrode oder eine Nickelelektrode oder eine Legierungselektrode oder eine mit einem Edelmetalloxid beschichtete inerte Elektrode ist.

4. Plasmadenitrifikationsvorrichtung nach einem der Ansprüche 1-3, **dadurch gekennzeichnet, dass** eine Filtermaterialschicht (270) in der Denitrifikationszone (210) vorgesehen ist, eine obere Oberfläche der Filtermaterialschicht (270) unter dem oberen Wasserdurchlass (263) liegt, eine untere Oberfläche der Filtermaterialschicht (270) über der Katalysatorschicht (250) liegt.

5. Plasmadenitrifikationsvorrichtung nach Anspruch 4, **dadurch gekennzeichnet, dass** die Filtermaterialschicht (270) granularen Quarzsand umfasst.

6. Verfahren zum Betreiben der Plasmadenitrifikationsvorrichtung nach Anspruch 1, das die folgenden Schritte umfasst:
S1: Durchführen einer Plasmabehandlung an Rohwasser, das durch einen Einlass eines Plasmagenerators (110) unter elektrifizierten Bedingungen und einem Katalysator eingeleitet wird; wobei das Wasser 1-10 s lang im Plasmagenerator (110) bleibt; der Plasmagenerator eine Impulsspannung von 0,3 kV-30 kV, eine Stromdichte von 1-10 mA/cm², eine Betriebsfrequenz von 5-80 kHz aufweist;
S2: Leiten des in S1 behandelten Wassers durch einen Auslass des Plasmagenerators (110) und einen Wasserverteiler (240) in einen Denitrifikationsbehälter (200), um dort für 10-30 Minuten eine Denitrifikationsreaktion durchzuführen; wobei sich Schlamm im Wasser an einem Boden des Denitrifikationsbehälters (200) absetzt und abgelassen wird; das Wasser in einem oberen Teil des Denitrifikationsbehälters (200) über einen Wasserauslass (221) abgelassen wird;
S3: Untersuchen der Wasserqualität des Ausflusses von S2, wobei der Ausfluss entweder direkt abgelassen wird oder in einen Wasserkreislauf tritt und wieder den Schritten S1-S3 unterzogen wird.

## Revendications

1. Dispositif de dénitrification au plasma, **caractérisé en ce qu'**il comprend :
un dispositif de génération de plasma (100) qui comprend un générateur de plasma (110) et une alimentation électrique pulsée (120); le générateur de plasma comprend au moins un ensemble d'une électrode configurée pour générer du plasma ; une entrée du générateur de plasma est configurée pour permettre le passage d'eaux usées ;
un réservoir de dénitrification (200) qui comprend une coque et une zone de dénitrification (210), une zone de purification d'eau (220) et une zone de recueil de boues (230) prévues à l'intérieur de la coque ; la zone de dénitrification (210) et la zone de purification d'eau (220) sont agencées de manière adjacente, la zone de recueil de boues (230) est agencée en dessous de la zone de dénitrification (210) ; une entrée d'eau (211) est prévue au niveau d'une paroi latérale de la zone de dénitrification (210), une sortie d'eau (221) est prévue au niveau d'une paroi latérale de la zone de purification d'eau (220) ;
une cloison est prévue entre la zone de dénitrification (210) et la zone de purification d'eau (220), et un passage d'eau est prévu au niveau de la cloison ;
la zone de dénitrification (210) et la zone de purification d'eau (220) sont connectées à travers le passage d'eau ; un fond de la zone de dénitrification (210) est pourvu d'une ouverture de recueil de boues, la zone de dénitrification (210) et la zone de recueil de boues (230) sont connectées à travers l'ouverture de recueil de boues ; une ouverture d'évacuation de boues (231) est prévue au niveau d'un fond de la zone de recueil de boues (230) ;
la zone de dénitrification (210) est pourvue d'un distributeur d'eau (240), le distributeur d'eau (240) distribue uniformément des eaux usées dans la zone de dénitrification (210) ; une entrée du distributeur d'eau (240) connecte une sortie du générateur de plasma (110) à travers l'entrée d'eau (211) ; une sortie du distributeur d'eau (240) est prévue au fond de la zone de dénitrification (210) ;
la zone de dénitrification (210) est pourvue d'une couche de catalyseur (250), la couche de catalyseur comprend un ou plusieurs éléments sélectionnés parmi le groupe constitué du palladium, nickel, rhodium, cuivre et fer ; ou comprend un ou plusieurs éléments sélectionnés parmi le groupe constitué d'un oxyde de palladium, d'un oxyde de nickel, d'un oxyde de rhodium, d'un oxyde de cuivre et d'un oxyde de fer ;
le générateur de plasma a une tension d'impulsion de 0,3 kV à 30 kV, une densité de courant de 1 à 10 mA/cm², une fréquence de service de 5 à 80 kHz ;
la cloison comprend une cloison fendue supérieure (261) et une cloison fendue inférieure (262) agencées de manière adjacente l'une à l'autre, la cloison fendue supérieure (261) délimite la zone de dénitrification (210), la cloison fendue inférieure (262) délimite la zone de purification d'eau (220) ; le passage d'eau comprend un passage d'eau supérieur (263) et un passage d'eau inférieur (264), le passage d'eau supérieur (263) est prévu au niveau d'un haut de la cloison fendue supérieure (261), le passage d'eau inférieur (264) est prévu au niveau d'un bas de la cloison fendue inférieure (262) ; un espace entre la cloison fendue supérieure (261) et la cloison fendue inférieure (262) constitue un trajet de passage d'eau (265) ;
une surface supérieure de la couche de catalyseur (250) est plus basse qu'un fond du passage d'eau supérieur (263), une surface inférieure de la couche de catalyseur (250) est plus haute qu'une sortie du distributeur d'eau (240).

2. Dispositif de dénitrification au plasma selon la revendication 1, **caractérisé en ce qu'**une plaque de déversoir (222) est prévue à la sortie d'eau (221), la plaque de déversoir (222) et une paroi latérale de la zone de purification d'eau (220) constituent un canal de sortie d'eau (223).

3. Dispositif de dénitrification au plasma selon la revendication 1, **caractérisé en ce que** l'électrode est l'une quelconque d'une électrode en graphite, d'une électrode en fer, d'une électrode en aluminium, d'une électrode en zinc, d'une électrode en cuivre, d'une électrode en plomb, d'une électrode en nickel, d'une électrode en alliage ou d'une électrode inerte enrobée d'un oxyde métallique noble.

4. Dispositif de dénitrification au plasma selon l'une quelconque des revendications 1 à 3, **caractérisé en ce qu'**une couche de matériau filtrant (270) est prévue dans la zone de dénitrification (210), une surface supérieure de la couche de matériau filtrant (270) est en dessous du passage d'eau supérieur (263), une surface inférieure de la couche de matériau filtrant (270) est au-dessus de la couche de catalyseur (250).

5. Dispositif de dénitrification au plasma selon la revendication 4, **caractérisé en ce que** la couche de matériau filtrant (270) comprend du sable de quartz granulaire.

6. Procédé de fonctionnement du dispositif de dénitrification au plasma selon la revendication 1, comprenant les étapes suivantes :
S1 : réaliser un traitement au plasma sur de l'eau brute introduite à partir d'une entrée d'un générateur de plasma (110) dans une condition électrifiée et un catalyseur ; l'eau reste dans le générateur de plasma (110) pendant 1 à 10 s ; le générateur de plasma a une tension d'impulsion de 0,3 kV à 30 kV, une densité de courant de 1 à 10 mA/cm², une fréquence de service de 5 à 80 kHz ;
S2 : diriger l'eau traitée en S1 à travers une sortie du générateur de plasma (110) et un distributeur d'eau (240) vers un réservoir de dénitrification (200) pour subir une réaction de dénitrification pendant 10 à 30 minutes ; des boues dans l'eau se déposent sur un fond du réservoir de dénitrification (200) et sont évacuées ; l'eau dans une partie supérieure du réservoir de dénitrification (200) est évacuée à travers une sortie d'eau (221) ;
S3 : examiner la qualité de l'eau de l'effluent de S2, l'effluent est soit directement évacué, soit pénètre dans un débouché en circulation et est de nouveau soumis aux étapes S1 à S3.
